# FASCICULE DE BREVET EUROPEEN

(11) **EP 0 470 917 B1**
(45) Date de publication et mention de la délivrance du brevet: **24.04.1996**
(21) Numéro de dépôt: 91440063.5
(22) Date de dépôt: 26.07.1991
(51) Int. Cl.: B60T 17/18, B62D 53/08, B60T 7/20

(54) **Dispositif de sécurité d'attelage pour convois routiers**
Sicherheitsanhängerkupplung für Fahrzeugzüge
Security coupling device for road vehicles

(30) Priorité: 31.07.1990 FR 9009934
(43) Date de publication de la demande: 12.02.1992
(73) Titulaire: LOHR INDUSTRIE, F-67980 Hangenbieten (FR)
(72) Inventeur: Bruneau, Michel, F-67100 Strasbourg (FR)
(74) Mandataire: Metz, Paul

(56) Documents cités:
- WO-A-90/02675
- GB-A- 2 029 536
- US-A- 3 658 391
- US-A- 4 223 767
- US-A- 4 313 616

## Description

L'invention se rapporte à un dispositif de sécurité d'attelage pour convois routiers.

Il s'agit plus particulièrement d'un dispositif d'avertissement du risque de rupture de l'attelage consécutif à une manoeuvre anormale dans les ensembles routiers articulés.

Il arrive fréquemment, en particulier lors des manoeuvres en marche arrière, que l'angle de braquage entre le véhicule moteur et le véhicule tracté dépasse une valeur jugée critique au-delà de laquelle les contraintes mécaniques subies par la plaque de support du crochet d'attelage, le crochet ou l'embout correspondant du véhicule d'attelage, le crochet ou l'embout correspondant du véhicule tracté atteignent puis dépassent des valeurs excessives susceptibles de provoquer une déformation puis une rupture d'un des éléments ou d'une liaison de l'attelage.

Dans la plupart des cas, la rupture n'est pas immédiate. Elle est sous-jacente ou latente. Dans un premier temps ne peuvent en effet apparaître que des déformations locales des organes d'attelage mentionnés plus haut ou des boulons de fixation de ces organes à la carrosserie. Ces déformations occasionnent l'apparition de jeux dans les fixations des organes d'attelage, invisibles, insoupçonnables et indétectables par le conducteur. Ces jeux conduisent après un temps de travail de l'attelage plus ou moins long à une rupture brutale d'attelage qui, si elle se produit sur route ou autoroute, engendre inévitablement un accident de la circulation aux conséquences plus ou moins graves.

On connaît par le brevet US n° 3,658,391 HENSLEY, un dispositif de sécurité pneumatique présent dans le circuit de freinage d'un véhicule à deux moyens opposés dont l'un entre en action lorsque l'autre est rendu inopérant par une fuite. Il s'agit d'un composant pneumatique de sécurité dans lequel une fonction logique assure l'entrée en action d'un dispositif de secours lorsque l'air comprimé fournissant l'énergie de freinage baisse en pression suite à une fuite.

Ce composant permettrait de bloquer les freins de la remorque en cas de fuite ou de décharge accidentelle ou provoquée sur le circuit de freinage.

On connaît, par ailleurs, par le brevet US n° 4,223,767 POWELL un dispositif et une méthode qui évitent la mise en portefeuille d'une remorque par rapport au camion. Selon ceux-ci, on prévoit la neutralisation des freins arrière de droite ou de gauche de la remorque pendant la traversée de la zone glissante. L'état de roue libre existant d'un seul côté a tendance à maintenir la remorque en ligne droite. Le dispositif utilisé comprend des moyens de désaccouplement des freins sous la forme d'une électrovanne montée sur l'un ou l'autre conduit d'alimentation en air de chaque frein arrière. Cette électrovanne est actionnée manuellement par le conducteur lorsqu'il traverse une zone glissante.

Ce brevet expose dans sa partie introductive (colonne 1 lignes 29 à 44) un état de la technique selon lequel les freins de droite ou de gauche sont équilibrés ou compensés chaque fois que l'angle entre la remorque et le tracteur devient inférieur à une valeur prédéterminée. Des commandes de freinage séparées sont envoyées aux freins de droite et de gauche pour équilibrer la remorque.

Il s'agit ici également de maintenir la remorque sur sa trajectoire lorsqu'elle traverse une zone glissante.

On connaît finalement l'invention exposée dans la publication de brevet GB-A-2 029 536 LEE qui se rapporte à une commande de sécurité pour un frein d'urgence d'un véhicule minier à propulsion électrique. Selon ce type de commande le frein d'urgence du type à ressort est appliqué tant qu'existe une action de mise en dépression sur la ligne de commande du frein. Une valve pilote commande la transmission du moteur. Elle est reliée à la ligne de commande du frein d'urgence si bien que le frein d'urgence reste desserré tant que la transmission du moteur n'est pas opérante.

Ce document divulgue simplement la commande d'un frein par dépression du circuit pneumatique.

La présente invention a pour but d'éviter la mise en portefeuille d'une remorque par la fourniture d'un signal au conducteur provenant du blocage des freins de la remorque à partir d'une certaine déviation angulaire entre le tracteur et la remorque.

Elle a également pour but de signaler au conducteur de manière incontournable un risque de rupture d'attelage et forcer celui-ci en cas de braquage excessif à s'arrêter puis à inspecter l'attelage et à prendre les dispositions nécessaires, fonction du degré de risque de rupture.

Facultativement on peut envisager de coupler au dispositif selon l'invention une mémoire contenant une information indiquant qu'un risque de rupture d'attelage a été détecté.

Les unités routières articulées comprennent deux conduites de freinage dont l'une est une conduite de sécurité appelée classiquement "main rouge" en raison de la couleur choisie pour la manette d'actionnement.

Afin de permettre le roulage du véhicule tracté, le circuit de main rouge doit être maintenu sous pression. Lorsqu'il n'est pas sous pression les freins de la remorque restent bloqués, entraînant l'immobilisation de l'ensemble routier.

Le dispositif selon l'invention permet de provoquer la mise à l'air libre du circuit de main rouge lors du braquage excessif entre le véhicule moteur et sa remorque.

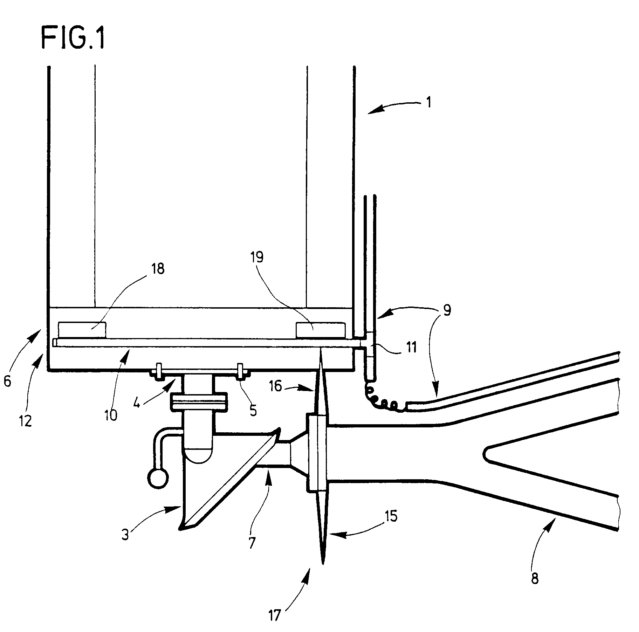

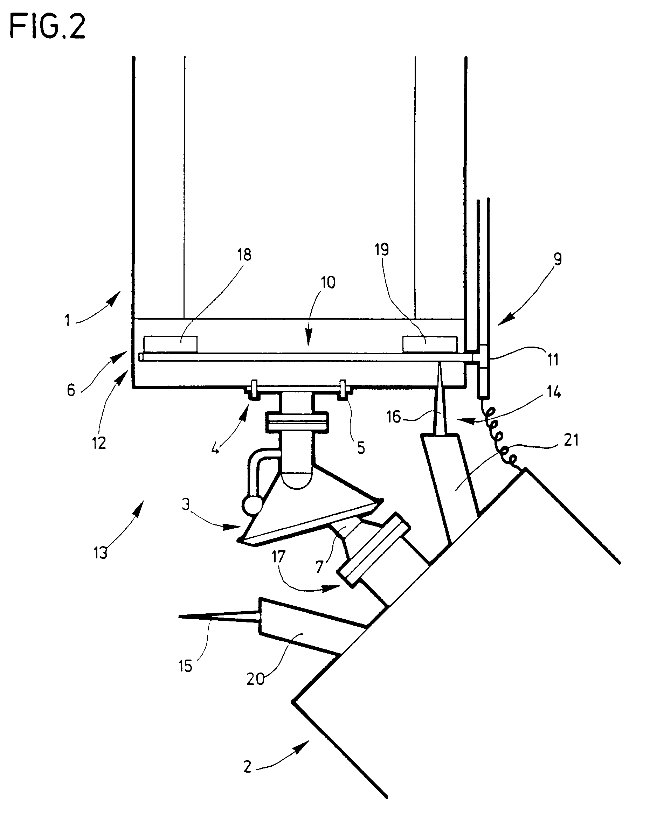

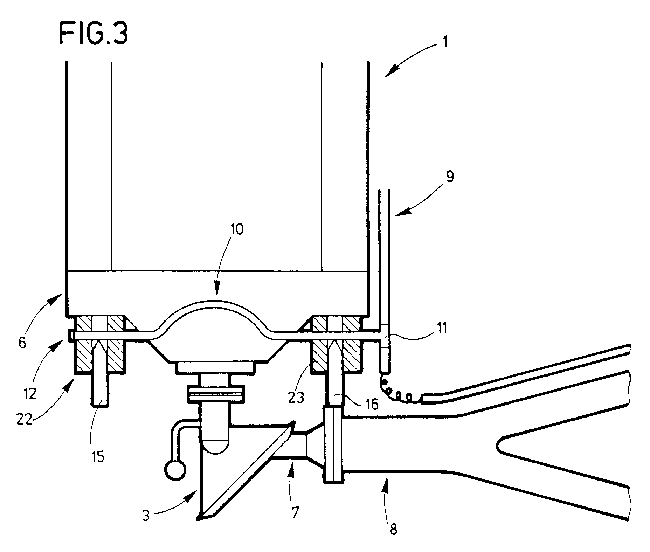

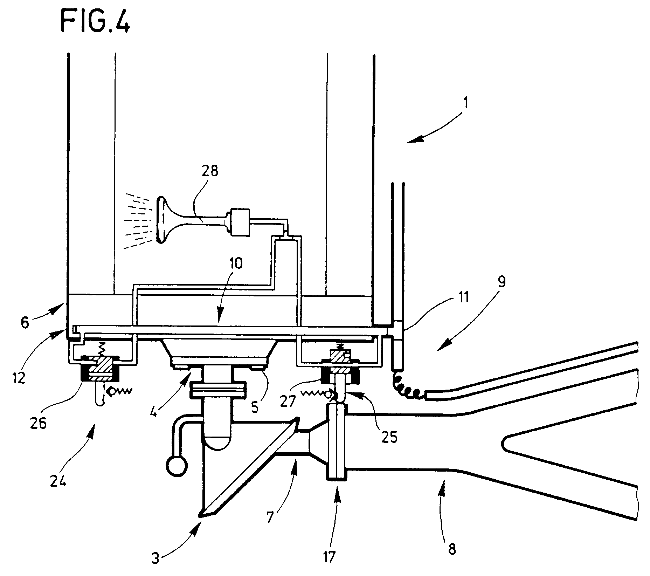

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue schématique en plan d'une variante à couteaux du dispositif de sécurité d'attelage selon l'invention ;
. la figure 2 est un schéma illustrant la possibilité de placer les couteaux sur la remorque ;
. la figure 3 est une vue en plan d'une variante couteaux-guillotine ;
. la figure 4 est une vue schématique en plan d'une variante à contacteurs-distributeurs.

L'idée générale inventive consiste à prévoir sur le circuit de sécurité de freinage de la remorque par un tronçon par exemple de dérivation susceptible d'être mis automatiquement en décharge par exemple par mise à l'air libre lorsque l'angle de braquage entre le véhicule moteur et sa remorque dépasse une valeur jugée critique au-delà de laquelle le maintien de la liaison d'attelage dans un bon état de résistance mécanique e peut plus être garanti.

Le même effet peut être obtenu en prévoyant un tronçon série amovible dans le circuit de sécurité, disposé au même endroit. On parlera par extension d'un tronçon de dérivation sans pour autant le limiter à ce type d'adjonction.

Un véhicule moteur 1 et un véhicule tracté ou remorque 2 sont accouplés au moyen d'un dispositif d'attelage constitué par exemple d'un support 3 de crochet monté sur une plaque de base 4 fixée par exemple à l'aide de boulons tels que 5 à une traverse 6 du châssis du véhicule moteur ou la carrosserie déposable d'un véhicule à moteur, directement ou au moyen d'une plaque intermédiaire. Un embout 7 est fixé, par exemple également par boulonnage, sur un timon 8 de remorque, soit directement, soit au moyen d'une pièce intermédiaire. Un circuit de freinage de sécurité 9 spécial de frein automatique ou celui dit de "main rouge", relie de façon classique une source de pression installée en général sur le véhicule à moteur , par exemple le camion, aux organes de freinage de remorque. Lorsque ce circuit n'est pas sous pression, les freins de remorque restent bloqués provoquant ainsi son immobilisation.

Le terme remorque employé ici désigne de façon très générale tous les véhicules tractés quel qu'en soit le type. Il désigne également un élément quelconque dans une suite de remorques. Par ailleurs, le véhicule moteur peut être le véhicule que tracte la remorque, même s'il n'est pas motorisé.

L'invention consiste à installer en circuit secondaire une conduite de dérivation 10 sur le circuit de "main rouge" 9 par l'intermédiaire d'un raccord 11 en T. Son extrémité libre 12 est obturée. Cette conduite est disposée transversalement à l'arrière du camion. Sur cette conduite agissent deux dispositifs 13 et 14 de décharge par mise à l'air libre ou à l'atmosphère du circuit de sécurité dit de "main rouge" mis en oeuvre par un élément situé à l'avant de la remorque au-delà de l'angle critique.

La conduite de dérivation 10 est de préférence mais non obligatoirement souple, perforable ou sectionnable par une lame ou une pointe.

En raison de la communication entre cette conduite de dérivation et le circuit de sécurité de freinage, la mise à l'air provoquera le vidage du circuit de sécurité et, instantanément, le blocage des freins de la remorque.

On a représenté sur la figure 1 une variante d'un dispositif de mise à l'air libre. Il est ici constitué par deux couteaux 15 et 16 disposés latéralement de part et d'autre de la tête d'attelage de remorque, par exemple solidaires de la tête de timon 17. Lorsque l'angle de braquage dans un sens ou dans l'autre entre le véhicule moteur et sa remorque dépasse une valeur critique définie par le constructeur ou le carrossier, l'un des couteaux 15 ou 16 vient appuyer sur la conduite passant à cet endroit contre des pièces d'enclume 18 et 19 ou contre une traverse de châssis pour la sectionner provoquant sa mise à l'atmosphère. Immédiatement, le blocage des freins de remorque se produit, le conducteur ressent rapidement à la conduite cette importante résistance provenant de la remorque. Il est donc informé immédiatement du risque de rupture. De plus, son convoi étant bloqué, il se trouve contraint de descendre de son poste de conduite et d'inspecter tout le dispositif d'attelage. S'il juge que les détériorations engendrées par la manoeuvre ne sont pas importantes, il lui suffit de remplacer la conduite de dérivation 10 par un tube de secours pour pouvoir débloquer les freins de remorque et rentrer prudemment puis faire effectuer une inspection complète du dispositif d'attelage dans l'atelier de son employeur ou dans un atelier spécialisé.

La longueur des couteaux 15 et 16 et l'implantation du tube de conduite de dérivation sont définis par le constructeur ou le carrossier en fonction des charges maximales du véhicule moteur 1 et sa remorque 2 ainsi que des caractéristiques mécaniques du dispositif d'attelage et de ses moyens de fixation.

Il est entendu que l'agencement des couteaux 15 et 16 n'est pas forcément symétrique et que l'on pourrait de façon équivalente installer les couteaux 15 et 16 sur le véhicule moteur et la conduite de dérivation 10 sur la remorque. L'important est d'assurer la mise à l'air libre de la conduite de dérivation 10 au-delà de l'angle critique de braquage, quel que soit le sens de braquage.

Bien entendu, les couteaux peuvent être remplacés par des pointes destinées à perforer la conduite souple de dérivation 10.

La figure 2 représente une variante selon laquelle les couteaux sont solidaires de l'avant de la remorque, par exemple montés sur des tamponnoirs ou des supports d'extension 20 et 21 convenablement orientés.

La figure 3 présente une variante du dispositif de sécurité selon la figure 1, variante intégrée où tous les éléments constitutifs essentiels du dispositif selon l'invention sont installés sur le véhicule moteur. Selon cette variante, les couteaux 15 et 16 sont disposés dans des organes de guidage 22 et 23 et actionnés par une partie prédéfinie de la remorque ou de son timon.

La figure 3 représente un dispositif de mise à l'air libre conçu pour ne pas détériorer la conduite de dérivation 10 fermée à son extrémité. Deux contacteurs 24 et 25 sont disposés de part et d'autre de l'axe médian longitudinal du véhicule moteur en remplacement des couteaux 15 ou 16. Ils sont montés coulissants dans des unités pneumatiques ou fluidiques du type blocs distributeurs de fluide 26 et 27 reliés à la conduite de dérivation 10 et possèdent une mise à l'air libre. Lorsque l'angle de braquage critique est atteint, quel que soit le sens du braquage, le contacteur concerné 24 ou 25 est actionné par un élément de la remorque ou du timon, par exemple la tête de timon 17, s'enfonce à l'intérieur du corps du distributeur correspondant et se verrouille en position active ou opérante au moyen d'une bille à rappel élastique, position dans laquelle le distributeur met la conduite de dérivation à l'air libre.

L'ensemble formé par la conduite et les dispositifs avoisinants peut être protégé par un capot.

Il est bien entendu équivalent d'installer la conduite de dérivation, les blocs distributeurs 26 et 27 et les contacteurs 24 et 25 sur la remorque et d'actionner le dispositif selon l'invention par une partie du véhicule moteur 1.

Tout autre composant de pneumatique ou d'hydraulique permettant la décharge du circuit convient également.

Par ailleurs, il est possible de remplacer de façon équivalente les commandes des distributeurs par des éléments fonctionnant en traction.

De plus, les contacteurs peuvent agir sur des commandes intermédiaires, électriques ou autres, actionnant les organes de mise à l'air libre.

Le déverrouillage en position des contacteurs est de préférence manuel pour forcer le conducteur à venir inspecter l'attelage avant de repartir

Cependant il est évidemment possible de commander le déverrouillage à distance à l'aide de moyens mécaniques, pneumatiques, hydrauliques, électriques ou autres.

On peut envisager également de coupler la commande du dispositif selon l'invention à un avertisseur sonore 28 monté par exemple sur la sortie de mise à l'air libre des distributeurs 26 et 27, ou à des avertisseurs visuels (voyant sur le tableau de bord, etc...) ou tout autre organe ou élément de signalement ou d'avertissement.

Il s'avère utile en général de conserver aussi en mémoire une information marquant l'occurrence de l'actionnement du dispositif selon l'invention.

On envisage d'utiliser les moyens suivants :
. mémoire mécanique (rupture d'un scellé, d'un fusible, ...) ;
. trace sur le disque du camion ;
. circuit de mémoire électronique, inviolable, accessible par exemple seulement au constructeur ou carrossier ;
. etc...

Le dispositif selon l'invention comprend facultativement les avertisseurs et leur commande, ainsi que le dispositif de mémorisation ou son adaptation à une mémoire existante sur l'un des véhicules et peut se présenter sous la forme générale d'un kit comprenant :
. la conduite de dérivation 10 de préférence souple,
. les organes de commande de mise à l'air libre,
. les organes de mise à l'air libre,
. dans le cas de dispositifs à couteaux, un tube ou tuyau de rechange.

## Revendications

1. Dispositif de sécurité contre un angle intempestif de braquage entre le véhicule à moteur (1) et la remorque (2) d'un convoi articulé comportant un circuit de sécurité (9) agissant sur les freins de la remorque (2), notamment un circuit de sécurité du type de celui de frein automatique, dispositif de sécurité (13, 14) forçant le conducteur à s'arrêter en rendant opérante la commande des freins de la remorque (2) caractérisé en ce qu'il comprend des moyens de décharge (13,14) du circuit de sécurité (9) mis en fonctionnement sur ce circuit (9) lorsque l'angle de braquage entre le véhicule moteur (1) et la remorque (2) dépasse une valeur critique.

2. Dispositif de sécurité selon la revendication 1 caractérisé en ce que les moyens de décharge (13,14) sont des moyens de mise à l'air libre.

3. Dispositif de sécurité selon les revendications 1 et 2 caractérisé en ce que le circuit de sécurité (9) sur lequel agissent les moyens de décharge (13,14) est une conduite additionnelle (10) montée en dérivation disposée transversalement à l'arrière du camion (1) et en ce que son extrémité libre est obturée.

4. Dispositif de sécurité selon la revendication 3 caractérisé en ce que la conduite de dérivation (10) est une conduite souple.

5. Dispositif de sécurité selon l'une quelconque des revendications précédentes caractérisé en ce que les moyens de décharge (13,14) sont des couteaux (15,16) solidaires de la tête d'attelage.

6. Dispositif de sécurité selon la revendication 5 caractérisé en ce que les couteaux (15,16) sont solidaires de la remorque (2).

7. Dispositif de sécurité selon la revendication 5 caractérisé en ce que les couteaux (15,16) sont guidés.

8. Dispositif de sécurité selon l'une quelconque des revendications de 1 à 4 caractérisé en ce que les moyens de décharge (13,14) sont des distributeurs de fluide (26,27) possédant une sortie à l'atmosphère.

9. Dispositif de sécurité selon la revendication 8 caractérisé en ce que les distributeurs de fluide sont actionnés par des contacteurs (24,25).

10. Dispositif de sécurité selon la revendication 9, caractérisé en ce que les contacteurs (24,25) actionnent des commandes intermédiaires en vue de la décharge.

11. Dispositif de sécurité selon les revendications 9 et 10 caractérisé en ce que les contacteurs (24,25) sont munis d'un dispositif de déverrouillage de la position opérante verrouillée qu'ils occupent après leur actionnement.

12. Dispositif de sécurité selon l'une quelconque des revendications précédentes caractérisé en ce que les moyens de décharge déclenchent des avertisseurs sonores (28) et/ou lumineux.

13. Dispositif de sécurité selon l'une quelconque des revendications précédentes caractérisé en ce que l'action de décharge est sauvegardée.

14. Dispositif de sécurité selon la revendication 13 caractérisé en ce que l'action de décharge brise un scellé ou un fusible.

15. Dispositif de sécurité selon la revendication 13 caractérisé en ce que l'action de sauvegarde laisse une trace de marquage sur le disque du camion.

16. Dispositif de sécurité selon les revendications de 13 à 15 caractérisé en ce que l'information sauvegardée ne peut être effacée que par le constructeur ou le carrossier des véhicules.

## Claims

1. Security device against an undesirable angle of lock between the tractor (1) and the trailer (2) of an articulated vehicle, comprising a security circuit (9) acting on the brakes of the trailer (2), in particular a security circuit of the automatic brake type, the security device (13, 14) forcing the driver to stop by making the brake control on the trailer (2) operative, characterised in that it comprises discharge means (13,14) for the security circuit (9) brought into operation on the circuit (9) when the angle of lock between the tractor (1) and the trailer (2) exceeds a critical value.

2. Security device according to Claim 1, characterised in that the discharge means (13,14) are means for discharge to the open air.

3. Security device according to Claims 1 and 2, characterised in that the security circuit (9) on which the discharge means (13,14) act is an additional duct (10) mounted as a branch arranged transversely at the rear of the lorry (1) and in that the free end thereof is closed.

4. Security device according to Claim 3, characterised in that the branch duct (10) is flexible duct.

5. Security device according to any one of the preceding Claims, characterised in that the discharge means (13,14) are cutter members (15,16) which are integral with the coupler head.

6. Security device according to Claim 5, characterised in that the cutter members (15,16) are integral with the trailer (2).

7. Security device according to Claim 5, characterised in that the cutter members (15,16) are guided.

8. Security device according to any one of Claims 1 to 4, characterised in that the discharge means (13,14) are fluid distributors (26,27) having an outlet into the atmosphere.

9. Security device according to Claim 8, characterised in that the fluid distributors are actuated by contacts (24,25).

10. Security device according to Claim 9, characterised in that the contacts (24,25) actuate the intermediate controls in respect of the discharge.

11. Security device according to Claims 9 and 10, characterised in that the contacts (24,25) are provided with a device for unlocking the contacts from the engaged operating position which they occupy after actuation.

12. Security device according to any one of the preceding Claims, characterised in that the discharge means trigger acoustic (28) and/or illuminated alarms.

13. Security device according to any one of the preceding Claims, characterised in that the discharge action is protected.

14. Security device according to Claim 13, characterised in that the discharge action breaks a seal or a fuse.

15. Security device according to Claim 12, characterised in that the action of the protector leaves a trace mark on the disc of the lorry.

16. Security device according to one of Claims 13 to 15, characterised in that the protected information can only be deleted by the manufacturer of the vehicles or by the producer of the body of the vehicles.

## Patentansprüche

1. Sicherheitskupplung zum Verhindern eines unerwünschten Einschlagwinkels zwischen dem Motorfahrzeug (1) und dem Anhänger (2) eines gelenkigen Fahrzeugzuges, bestehend aus einem Sicherheitskreislauf (9), der auf die Bremsen des Anhängers (2) einwirkt, insbesondere aus einem Sicherheitskreislauf wie für die automatische Bremsung, wobei die Sicherheitseinrichtung (13,14) den Fahrer dazu zwingt, anzuhalten, indem die Steuerung der Bremsen des Anhängers (2) wirksam wird,
**gekennzeichnet durch**
Einrichtungen (13,14) für die Entlastung des Sicherheitskreislaufs (9), die den Kreislauf (9) einschalten, wenn der Einschlagwinkel zwischen dem Motorfahrzeug (1) und dem Anhänger (2) einen kritischen Wert übersteigt.

2. Sicherheitskupplung nach Anspruch 1,
**dadurch gekennzeichnet,** daß die Einrichtungen (13,14) für die Entlastung Einrichtungen sind, die eine Verbindung mit der Außenluft herstellen.

3. Sicherheitskupplung nach den Ansprüchen 1 und 2,
**dadurch gekennzeichnet,** daß der Sicherheitskreislauf (9), auf den die Einrichtungen (13,14) für die Entlastung einwirken, eine zusätzliche Leitung (10) ist, die in dem hinteren Bereich des Motorfahrzeuges (1) als Abzweigung quer verlegt ist, und daß ihr freies Ende verschlossen ist.

4. Sicherheitskupplung nach Anspruch 3,
**dadurch gekennzeichnet,** daß die Abzweigleitung eine biegsame Leitung (10) ist.

5. Sicherheitskupplung nach einem der vorhergehenden Ansprüche,
**dadurch gekennzeichnet,** daß die Einrichtungen (13,14) für die Entlastung mit dem Kupplungskopf fest verbundene Messer (15,16) sind.

6. Sicherheitskupplung nach Anspruch 5,
**dadurch gekennzeichnet,** daß die Messer (15,16) mit dem Anhänger (2) fest verbunden sind.

7. Sicherheitskupplung nach Anspruch 5,
**dadurch gekennzeichnet,** daß die Messer (15,16) geführt sind.

8. Sicherheitskupplung nach einem der Ansprüche 1 bis 4,
**dadurch gekennzeichnet,** daß die Einrichtungen (13,14) für die Entlastung Verteiler (26,27) für ein Medium sind, die einen Ausgang zur Außenluft aufweisen.

9. Sicherheitskupplung nach Anspruch 8,
**dadurch gekennzeichnet,** daß die Verteiler für ein Medium durch Kontaktgeber (24,25) betätigbar sind.

10. Sicherheitskupplung nach Anspruch 9,
**dadurch gekennzeichnet,** daß die Kontaktgeber (24,25) für die Entlastung Zwischensteuerungen betätigen.

11. Sicherheitskupplung nach den Ansprüchen 9 und 10,
**dadurch gekennzeichnet,** daß die Kontaktgeber (24,25) mit einer Einrichtung für die Entriegelung aus der verriegelten Betriebsstellung versehen sind, in der sie sich nach deren Betätigung befinden.

12. Sicherkeitskupplung nach einem der vorhergehenden Ansprüche,
**dadurch gekennzeichnet,** daß die Einrichtungen (13,14) für die Entlastung akustische und/oder optische Warngeräte (28) auslösen.

13. Sicherheitskupplung nach einem der vorhergehenden Ansprüche,
**dadurch gekennzeichnet,** daß der Vorgang der Entlastung anzeigbar ist.

14. Sicherheitskupplung nach Anspruch 13,
**dadurch gekennzeichnet,** daß der Vorgang der Entlastung eine Verriegelung oder eine Schmelzsicherung zerstört.

15. Sicherheitskupplung nach Anspruch 13,
**dadurch gekennzeichnet,** daß der Vorgang der Sicherung eine Markierung auf der Scheibe des Fahrtenschreibers des Motorfahrzeuges hinterläßt.

16. Sicherheitskupplung nach einem der Ansprüche 13 bis 15,
**dadurch gekennzeichnet,** daß die gesicherte Information nur von dem Hersteller oder von dem Karosseriehersteller des Fahrzeuges löschbar ist.
